# EUROPEAN PATENT APPLICATION

(11) **EP 2 278 534 A1**
(43) Date of publication of application: **26.01.2011**
(21) Application number: 09750298.3
(22) Date of filing: 02.02.2009
(51) Int. Cl.: G06K 19/10, G06F 21/20, G06F 21/24

(54) **IC CARD, IC CARD SYSTEM, AND METHOD THEREOF**

(30) Priority: 19.05.2008 JP 2008130616
(71) Applicant: Hitachi, Ltd., Chiyoda-ku Tokyo 100-8280 (JP)
(72) Inventor: UMEZAWA, Katsuyuki, Kawasaki-shi Kanagawa 215-0013 (JP); MATSUMOTO, Kenji, Kawasaki-shi Kanagawa 212-8567 (JP); TERADA, Katsuya, Kawasaki-shi Kanagawa 212-8567 (JP); YAMAGUCHI, Yoshiaki, Kawasaki-shi Kanagawa 212-8567 (JP)
(74) Representative: Calderbank, Thomas Roger
(86) International application number: PCT/JP2009/000385
(87) International publication number: WO 2009/141936

(57) **Abstract**

The present invention provides an IC card including: a key storage unit for storing a secret key set by an issuer of the IC card at the issue of the card, a public key certificate of the parent IC card that is issued by the certification authority, a public key singed by a private key of the parent IC card, and a private key; a data transmitting/receiving unit for receiving at least the public key certificate and the signed public key from the parent IC card; a calculation unit for decrypting encrypted biometric information of a user that is received from the parent IC card, using the secret key; and a biometric information storage unit for storing the decrypted first biometric information. In this way, the use of the IC card is restricted to whether the biometric information of the user is valid.

## Description

### FIELD OF THE INVENTION

The present invention relates to an IC card system. More particularly, the invention relates to a child IC card generated from a parent IC card, an IC card, a system and a method for generating and using the same.

### BACKGROUND ART

There is known a method for temporarily generating a new pair of public key and private key by a private key from a pair of public key and private key, and issuing a temporary certificate for a use (for example, Patent Document 1). There is also known a method for activating a private key by the biometric information of an individual (for example, Patent Document 2). Further, there is known a method for updating an IC card having a biometric authentication function (for example, Patent Document 3). Still further, there is known a method for transferring data from an old card to a new card, and deleting the transferred data properly from the old card (for example, Patent Document 4).

[Patent Document 1] Japanese Patent No. 3905961
[Patent Document 2] JP-A No. 2006-73021
[Patent Document 3] JP-A No. 2006-195591
[Patent Document 4] JP-A No. 2006-309475

### DISCLOSURE OF THE INVENTION

### PROBLEM TO BE SOLVED BY THE INVENTION

IC card with a public identity certificate, such as Basic Resident Register card, has been widely used. At the same time, there is a significant increase in the number of users of mobile phones. The Basic Resident Register card is like a registered personal seal in the real world, making the owner hesitate to carry it with him or her everywhere. On the other hand, the mobile phone is a device that the user carries with him or her all the time. When such a mobile phone has a function of a sub card of the Basic Resident Register card, the number of users of the public services is expected to be increased, and the convenience of users is also expected to be improved. From the point of view of the convenience of users, it is efficient that everyone can copy such a sub card function, but is important to restrict the function to only the user at the time of use.

As described above, if a user carefully keeps one IC card as a parent IC card and can use a child IC card generated from the parent IC card, the convenience and safety will be enhanced for use with the card. At this time, it is important to ensure the followings: the child IC card is safely generated; the use of the generated child IC card is restricted to the user; and the user can distinguish between the parent IC card and the child IC card.

In Patent Document 1, a key of a child IC card is generated by a private key of a parent IC card, and a validity check is performed to verify the expiration date, the intended use and the like of the child IC card at the time of the use of the card. To authenticate the child IC card to the parent IC card, it suffices to verify the expiration date of the parent IC card, the intended use and the like. Further, there is no need to use the private key of the parent IC card to generate a key pair for the child IC card. In addition, freedom in the generation and use of the child IC card does not ensure that the use of the child IC card is restricted to the valid user of the particular IC card.

Patent Document 3 shows a method for updating an IC card having a biometric authentication function in which it is provide a safe terminal device. Further, in Patent Document 4, it is necessary to delete the data of an old card, which requires specific applications for both the old card and a new card. However, there is no need to delete the data of the parent IC card to generate a child IC card.

The above description assumes that the mobile phone has the sub card function. In this specification, it is called as IC card because there is no other suitable name. It suffices that the IC card is a device having the function described in this specification. The form of the IC card is not restricted to the card type. Small communication devices and terminal devices, such as mobile phones, are a form of the IC card according to the present invention, as long as they have the function of IC card described in this specification.

### MEANS FOR SOLVING THE PROBLEM

The present invention has been made in light of the above circumstances, and provides a child IC card generated from a parent IC card, and a system and method for generating and using the child IC card.

An aspect of the present invention is an IC card including: a key storage unit for storing a secret key set by an issuer of the IC card at the issue of the card, a public key certificate of a parent IC card that is issued by the certification authority, a public key signed by a private key of the parent IC card, and a private key; a data transmitting/receiving unit for receiving at least the public key certificate and the signed public key from the parent IC card; a calculation unit for decrypting encrypted biometric information of a user, which is received from the parent IC card, using the secret key; and a biometric information storage unit for storing the decrypted first biometric information.

In the IC card according to another preferred aspect of the present invention, the signed public key is a key generated in such a way that a public key of a pair of the public key and private key generated by the parent IC card is signed by the private key of the parent IC card. The private key, which is stored in the key storage unit, is a key generated in such a way that the private key of the pair of the public key and private key is encrypted by the first biometric information.

The IC card, according to still another preferred aspect of the present invention, includes a key generation unit for generating a pair of public key and private key. The signed public key is a key generated in such a way that the public key generated by the key generation unit is signed by the private key of the parent IC card. The private key stored in the key storage unit is a key generated by the key generation unit.

The IC card, according to still another preferred aspect of the present invention, further includes a certificate generation unit for generating, in response to a request for generating a grandchild IC card, another signed public key in such a way that the public key generated by the key generation unit is signed by the private key.

Another aspect of the present invention is an IC card system including a parent IC card and a child IC card. The parent IC card includes: a first key storage unit for storing a first secret key set by an issuer of an IC card, a public key certificate of the parent IC card that is issued by the certification authority, and a first private key; a first calculation unit for generating a public key signed by the first private key, and encrypting first biometric information of a user by the secret key; and a first data transmitting/receiving unit for transmitting at least the public key certificate, the signed public key, and the encrypted first biometric information to the child IC card. The child IC card includes: a second key storage unit for storing a second secret key set by the issuer of the IC card, the public key certificate, the signed public key, and a second private key; a second data transmitting/receiving unit for receiving at least the public key certificate, the signed public key, and the encrypted first biometric information from the parent IC card; a second calculation unit for decrypting the encrypted first biometric information received by the data transmitting/receiving unit, using the second secret key; and a biometric information storage unit for storing the decrypted first biometric information.

In the IC card system according to another preferred aspect of the present invention, the signed public key is generated in such a way that a first public key of a pair of the first public key and first private key, which is generated by the parent IC card, is signed by the first private key. The second private key stored in the second key storage unit is a key generated in such a way that the first private key of the pair of the first public key and the first private key is encrypted by the first biometric information.

Still another aspect of the present invention is an IC card system including an IC card and a service provider device. The IC card includes: a biometric information storage unit for storing first biometric information; a key storage unit for storing a secret key set by an issuer of the IC card at the issue of the card, a public key certificate of a parent IC card that is issued by the certification authority, a public key signed by a private key of the parent IC card, and a private key encrypted by the first biometric information; a calculation unit for decrypting the encrypted private key, in response to the reception of second biometric information and a random number and when the first biometric information and the second biometric information are identical to each other, by the first or second biometric information, and for calculating the signature value of the random number by the decrypted private key; and a data transmitting/receiving unit for receiving the second biometric information and the random number, and for transmitting the key certificate and the signed public key, which are stored in the key storage unit, as well as the calculated signature value of the random number to the service provider device. The service provider device verifies the public key certificate, the signed public key, and the signature value of the random number, which are transmitted from the IC card, to provide a service.

Still another aspect of the present invention is an IC card generation method for generating a child IC card from a parent IC card. The parent IC card includes the steps of: storing a first secret key set by an issuer of the IC card, a public key certificate of the parent IC card that is issued by the certification authority, and a first private key; generating a public key signed by the first private key; encrypting first biometric information of a user by the secret key; transmitting at least the public key certificate, the signed public key, and the encrypted first biometric information to the child IC card. The child IC card includes the steps of: storing a second secret key set by the issuer of the IC card, the public key certificate, the signed public key, and a second private key; receiving at least the public key certificate, the signed public key, and the encrypted first biometric information from the parent IC card; decrypting the encrypted first biometric information by the second secret key; and storing the decrypted first biometric information.

Still another aspect of the present invention is an IC card use method by the service provider device using the IC card. The IC card includes the steps of: storing first biometric information; storing a secret key set by an issuer of the IC card at the issue of the card, a public key certificate of the parent IC card that is issued by the certification authority, the public key signed by a private key of the parent IC card, and a private key encrypted by the first biometric information; decrypting the encrypted private key, in response to the reception of second biometric information and a random number and when the first biometric information and the second biometric information are identical to each other, by the first or second biometric information; calculating a signature value of the random number by the decrypted private key; and transmitting the public key certificate, the signed public key, and the signature value of the random number to the service provider device. The service provider device verifies the public key certificate, the signed public key, and the signature value of the random number, which are transmitted from the IC card, to provide a service.

### ADVANTAGE OF THE INVENTION

According to the present invention, it is possible that the use of the child IC card generated from the parent IC card is restricted to the valid user of the particular IC card.

### BEST MODE FOR CARRYING OUT THE INVENTION

Embodiments of the present invention will be described. It is to be understood, however, that the present invention is not limited to these embodiments.

### First Embodiment

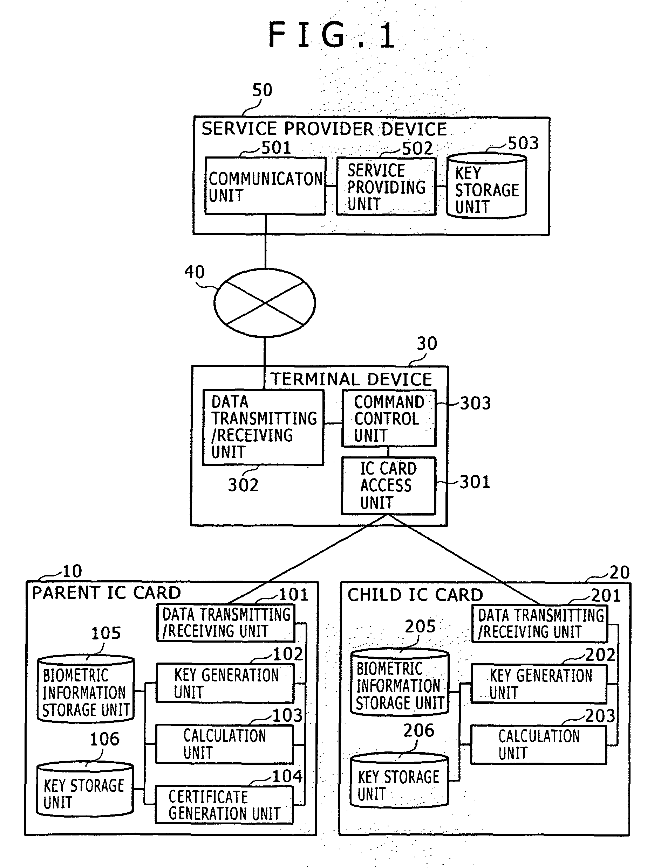

Fig. 1 is a block diagram of an IC card system according to a first embodiment. In the IC card system of this embodiment, as shown in Fig. 1, a parent IC card 10 and a child IC card 20 are coupled to a terminal device 30. The terminal device 30 and a service provider device 50 are coupled together by one or plural networks 40, such as the Internet or mobile phones.

The child IC card is generated in such a way that the parent IC card 10 and a new IC card (which does not operate as the child IC card 20) are coupled to the terminal device 30 to transmit and receive data between these cards. When the user receives a service by the generated child IC card 20, the terminal device 30 uses the child IC card coupled to an IC card access unit 301 of the terminal device 30, to provide a service to the user from the service provider device 50 through the network 40.

The parent IC card 10 includes: a data transmitting/receiving unit 101 for transmitting and receiving data to and from the terminal device 30; a key generation unit 102 for generating a pair of public key and private key for the child IC card 20; a calculation unit 103 for performing signature and encryption processes; a certificate generation unit for generating a signature value for the public key for the child IC card 20; a biometric information storage unit 105 for storing the biometric information (the feature information of the biometric information) such as the fingerprint, venous information, and facial image of the user; and a key storage unit 106 for storing a secret key set by the issuer of the IC card at the issue of the card, a private key used for authentication, and a public key certificate.

The child IC card 10 includes: a data transmitting/receiving unit 201 for transmitting and receiving data to and from the terminal device 30; a key generation unit 202 for generating a pair of public key and private key for the child IC card 20; a calculation unit 303 for performing signature and encryption processes; a biometric information storage unit 105 for storing the biometric information such as the fingerprint, venous information, and facial image of the user; and a key storage unit 206 for storing a secret key set by the issuer of the IC card at the issue of the card, the private key used for authentication, the public key, the signature value of the public key, and the public key certificate of the parent IC card 10.

The terminal device 30 includes: a data transmitting/receiving unit 302 for transmitting and receiving data to and from the service provider device 50 through the network 40; a command control unit 303 for generating and analyzing commands for the parent card and/or the child IC card; and an IC card access unit 301 for transmitting and receiving IC card commands to and from the parent IC card and/or the child IC card.

The service provider device 50 includes: a communication unit 501 for transmitting and receiving data through the network 40; a service providing unit 502 for providing a service by the IC card; and a key storage unit 503 for storing the public key certificate of the certification authority that have issued the public key certificate of the parent IC card 10.

As will be apparent from the description given below, it is also possible to include the configuration of the terminal device 30 in the parent IC card 10 to perform the process of the terminal device 30.

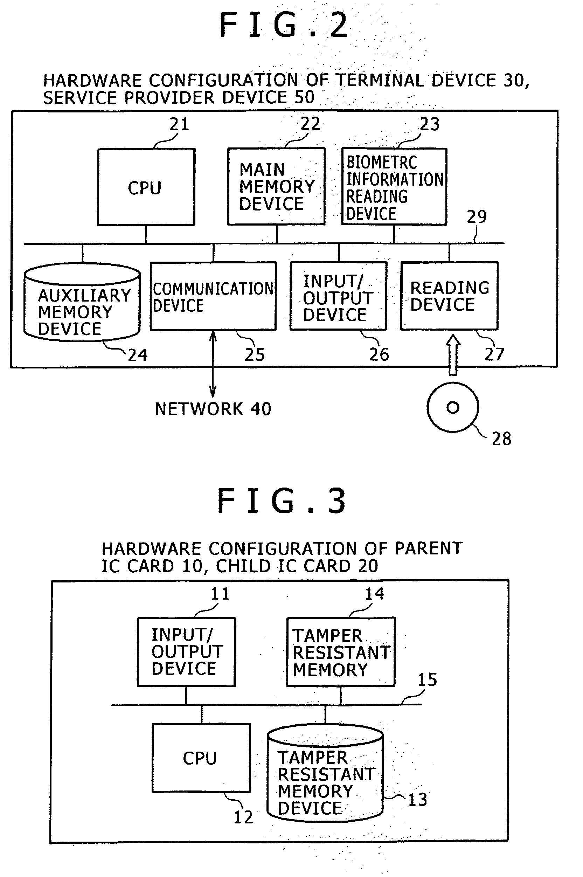

Fig. 2 is a hardware block diagram of the service provider device 50. In the service provider device 50, a CPU 21, a main memory device 22, a biometric information reading device 23, an auxiliary memory device 24, a communication device 25, an input/output device 26, a reading device 27 of a storage medium 28, and the like, are coupled together by an internal communication line 29.

Although illustration is omitted here, the hardware configuration of the terminal device 30 is the same as that of the service provider device 50, except for the scale and performance.

Fig. 3 is a hardware block diagram of the IC card (the parent IC card 10, the child IC card 20). In the parent IC card 10, a CPU 12, an input/output device 11, a tamper resistant memory 14, a tamper resistant memory device 13, and the like, are coupled together by an internal communication line 15. In the case in which the configuration of the terminal device 30 is included in the parent IC card 10, the devices of the same function, for example, such as the CPU 12 and the CPU 21, are replaced with a common device. Further, when the parent IC card 10 is a small communication device or a terminal device such as a mobile phone, the reading device 27 of the storage medium 28 and the like may be provided, but may not for the parent IC card 10 of a card-type form.

The certificate verification process of this embodiment will be described. A process program stored in the auxiliary memory device 24 of each device is loaded into the main memory device 22. The process program is executed by the CPU. In this way, the process of each processor is performed. Each program may be stored in advance in the auxiliary memory device 24, or may be loaded through another storage medium or communication medium (a network, or a carrier wave or a digital signal that propagates through a network) according to the necessity.

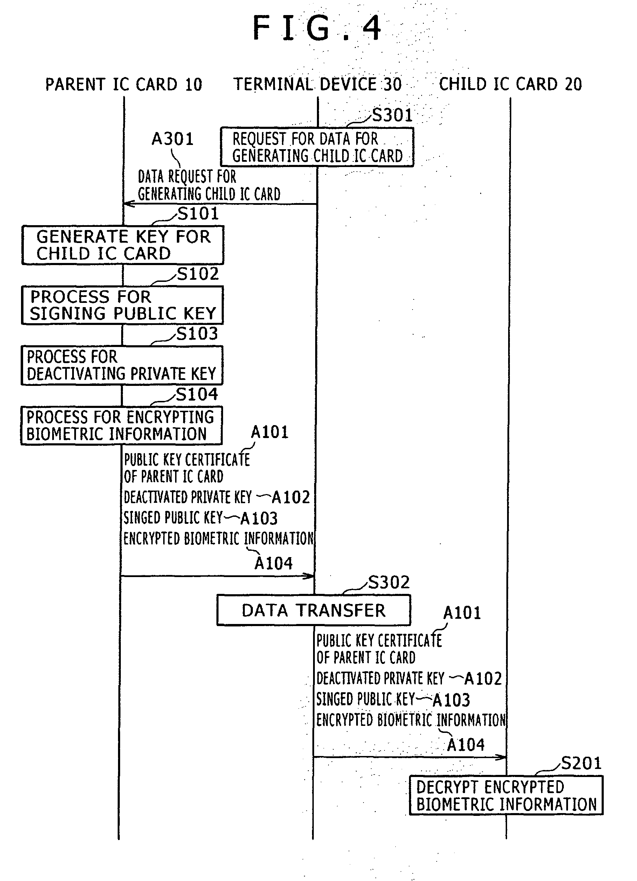

Fig. 4 is a flowchart of the process of generating the child IC card 20 from the parent IC card 10 through the terminal device 30. First, the terminal device 30 requests to the parent IC card 10 for data for generating the child IC card (S301).

In response to the request, the key generation unit 102 of the parent IC card 10 generates a pair of public key and private key for the child IC card (S101). The calculation unit 103 of the parent IC card 10 calculates the signature value for the public key generated in S101 by the own private key stored in the key storage unit 106, and generates a signed public key (S102). The calculation unit 103 of the parent IC card 10 encrypts the private key generated in S101 by the biometric information stored in the biometric information storage unit 105, to deactivate the private key (S103). Further, the calculation unit 103 of the parent IC card 10 encrypts the biometric information stored in the biometric information storage unit 105, using a secret key that has been stored in the key storage unit 106 since the issue of the IC card (S104). The parent IC card 10 transmits the public key certificate A101 of the parent IC card 10 that is stored in the key storage unit, the deactivated private key A102 generated in S103, the signed public key A103 generated in S102, and the encrypted biometric information A104 generated in S104, to the terminal device 30 through the data transmitting/receiving unit 101.

The terminal device 30 transfers the public key certificate A101 of the parent IC card 10, the deactivated private key A102, the signed public key A103, and the encrypted biometric information A104 to the child IC card 20 (S302).

The child IC card 20 receives the public key certificate A101 of the parent IC card 10, the deactivated private key A102, and the signed public key A103, through the data transmitting/receiving unit 201. Then, the child IC card 20 stores the received data in the key storage unit 206. Further, the calculation unit 203 of the child IC card 20 decrypts the encrypted biometric information A104, using a secret key that has been stored in the key storage unit 206 since the issue of the IC card. Then, the child IC card 20 stores the decrypted biometric information in the biometric information storage unit 205.

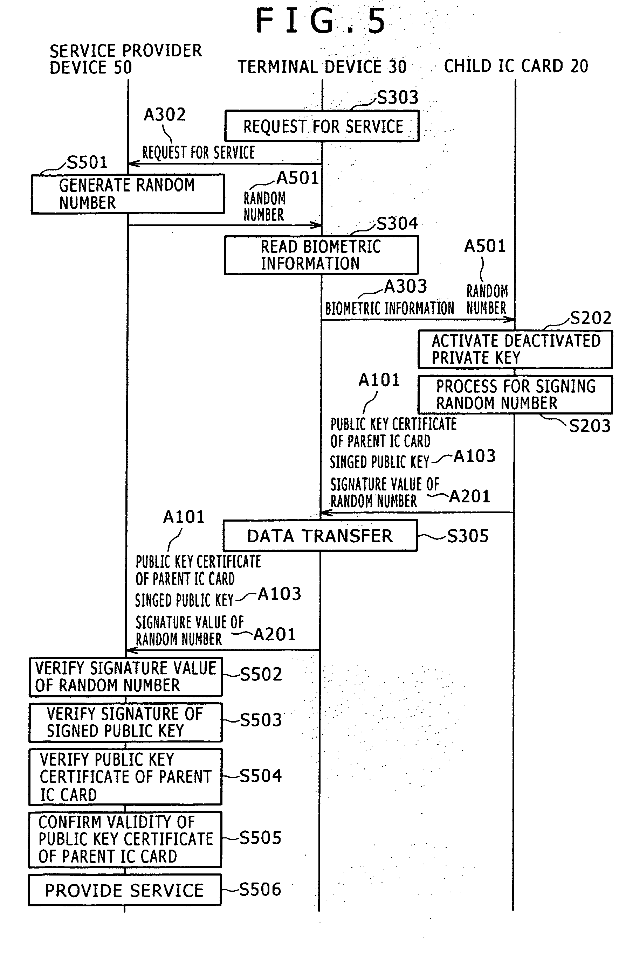

Fig. 5 is a flowchart of the process for the user to receive a service from the service provider device 50 by the generated child IC card 20. First, the terminal device 30 transmits a service request (A302) to the service provider device 50 (S303). When the child IC card 20 is a device such as a mobile phone, the child IC card 20 may transmit the service request (A302) to the service provider device 50. The service provider device 50 generates a random number A501 (S501), and transmits to the terminal device 30.

The terminal device 30 receives the random number A501 from the service provider device 50, and reads the biometric information of the user of the child IC card by the biometric information reading device 23 (S304). The terminal device 30 transmits the biometric information A303 and the random number A501 to the child IC card 20 through the IC card access unit 301.

Although illustration is omitted, the child IC card 20 compares the biometric information A303 transmitted from the terminal device 30 with the biometric information stored in the biometric information storage unit 205 of the child IC card. If the two information pieces are different from each other, the child IC card 20 stops the process, preventing reception of the service provision using this child IC card 20. When the two information pieces are identical, the child IC card 20 decrypts and activates the deactivated private key A102 stored in the key storage unit 206 by the biometric information A303 (S202). The calculation unit 203 of the child IC card 20 calculates the signature value with respect to the random number generated by the service provider 50, using the private key A102 activated in S202 (S203). The child IC card 20 transmits the public key certificate A101 of the parent IC card 10 and the signed public key A103, which are stored in the storage unit 206 of the child IC card 20, as well as the generated signature value A201 of the random number A501, to the terminal device 30 through the data transmitting/receiving unit 201.

The terminal device 30 transfers the public key certificate A101 of the parent IC card 10, the signed public key A103, and the signature value A201 of the random number A501 to the service provider device 50 (S305).

The service provider device 50 verifies that the signature value A201 of the random number, which is received from the terminal device 30, is valid using the public key of the signed public key A103 (S502). Then, the service provider device 50 verifies the signature of the signed public key A103, using the public key certificate A101 of the parent IC card 10 (S503). Further, the service provider device 50 also verifies the signature of the public key certificate A101 of the parent IC card 10, using the public key certificate of the certification authority that have issued the public key certificate A101 of the parent IC card 10, which is stored in the key storage unit 503 of the service provider device 50 (S504). In this way, the service provider device 50 confirms that the expiration date, the intended purpose and the like of the public key certificate A101 of the parent IC card 10 are all valid (S505). When the verifications from S502 to S505 are successful, the service provider device 50 provides a predetermined service (S506).

### Second Embodiment

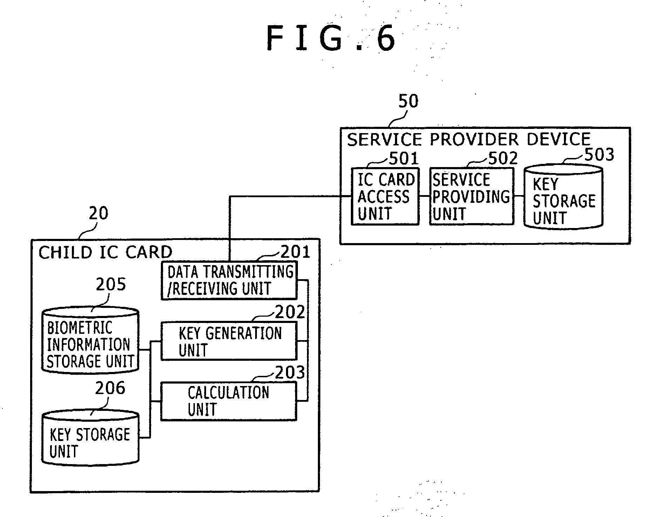

Fig. 6 is a block diagram of an IC card system according to a second embodiment. The child IC card 20 is generated in the same manner as described in the first embodiment. In other words, the child IC card 20 is generated by transmitting and receiving data between the parent IC card 10 and the child IC card 20. The configuration of the second embodiment is different from the configuration of the first embodiment in that when the user uses the generated child IC card 20 to receive a service, the child IC card 20 is coupled directly to an IC card access unit 504 of the service provider device 50, not through the terminal device 30. Here, the difference from the first embodiment is that the service provider device 50 includes the IC card access unit 504 for transmitting and receiving data to and from the child IC card 20.

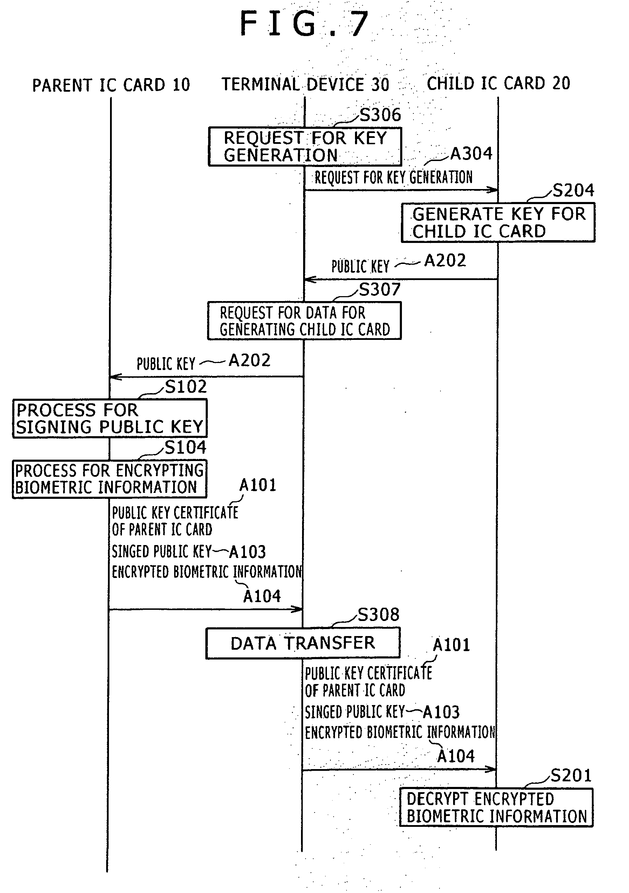

Fig. 7 is a flowchart of the process of generating the child IC card 20, centering on the terminal device 30 according to the second embodiment. Here, the difference from the generation process of the child IC card 20 used in the first embodiment in Fig. 4, is that when the child IC card 20 is used by the user, the service provider device 50 is supposed to provide a service to the user in a face-to-face manner. In other words, the service provider device 50 can verify the biometric information presented by the user, for example, such as a facial image, in a face-to-face manner. For this reason, there is no need to deactivate the private key A102 of the child IC card 20 by the biometric information.

The terminal device 30 requests to the child IC card 20 for key generation (S306). The key generation unit 202 of the child IC card 20 generates a pair of public key and private key (S204). Then, the child IC card transmits the generated public key A202 to the terminal device 30.

The terminal device 30 transfers the received public key A202 to the parent IC card 10 (S307). The calculation unit 103 of the parent IC card 10 calculates the signature value for the public key A202 by the private key stored in the key storage unit 106, and generates a signed public key (S102). The calculation unit 103 of the parent IC card 10 encrypts the biometric information stored in the biometric information storage unit 105 by a secret key stored in the key storage unit 106 (S104). The parent IC card 10 transmits the public key certificate A101 of the parent IC card 10 that is stored in the key storage unit 106, the generated signed public key A103, and the encrypted biometric information A104, to the terminal device 30 through the data transmitting/receiving unit 101.

The terminal device 30 transfers the public key certificate A101 of the parent IC card 10, the signed public key A103, and the encrypted biometric information A104 to the child IC card 20 (S308). The child IC card 20 receives and stores the public key certificate A101 of the parent IC card and the signed public key A103, through the data transmitting/receiving unit 201. Further, the calculation unit 203 of the child IC card 20 decrypts the encrypted biometric information A104 by a secret key stored in the key storage unit 206, and stores the decrypted biometric information in the biometric information storage unit 205 (S201).

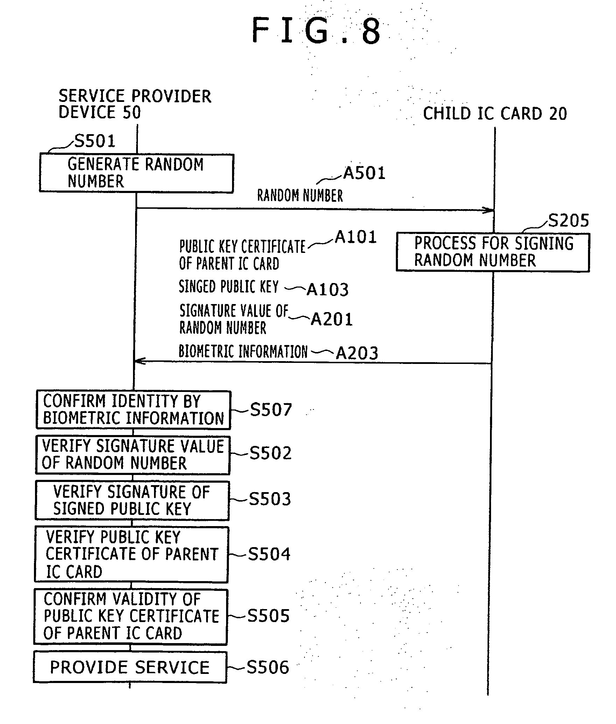

Fig. 8 is a flowchart of the process for the user to receive a service from the service provider device 50 in a face-to-face manner, using the generated child IC card 20. The service provider device 50 generates the random number A501 (S501). Then, the service provider device 50 transmits the generated random number A501 to the child IC card 20. The calculation unit 203 of the child IC card 20 calculates the signature value with respect to the random number A501 generated by the service provider 50, using the private key generated in S204 and stored in the key storage unit 206 (S205). The child IC card 20 transmits the public key certificate A101 of the parent IC card 10 and the signed public key A103, which are stored in the key storage unit 206, the generated signature value A201 of the random number A501, and the biometric information A203 stored in the biometric information storage unit 205, to the service provider device 50 through the data transmitting/receiving unit 201.

The service provider device 50 confirms the biometric information A203 received from the child IC card 20. The service provider device 50 compares the biometric information A203 with the figure of the individual to receive a service in a face-to-face manner, to verify the identity of the individual (S507). Theen, the service provider device 50 verifies that the signature value A201 of the random number A501, which is received from the terminal device 30, is valid using the private key of the signed public key A103 received from the child IC card 20 (S502). Then, the service provider device 50 verifies the signature of the signed public key A103 by the public key certificate A101 of the parent IC card 10 (S503). Further, the service provider device 50 also verifies the signature of the public key certificate A101 of the parent IC card 10, using the public key certificate of the certification authority that have issued the public key certificate A101 of the parent IC card 10 (S504). In this way, the service provider device 50 confirms that the expiration date, the intended purpose and the like of the public key certificate A101 of the parent IC card 10 are all valid (S505). When the verifications in steps S507 and from S502 to S505 are successful, the service provider device 50 provides a predetermined service (step S506).

The above has described the system and method for generating a child IC card with respect to a parent IC card and for using the generated child IC card. However, by providing the certificate generation unit 104 of the parent IC card shown in Fig. 1 to the child IC card, it is possible to generate a grandchild IC card by the child IC card and to use the generated grandchild IC card. As shown in Fig. 1, the difference in the configuration between the parent IC card 10 and the child IC card 20 is that there is no requirement for the certificate generation unit 104 in the child IC card 20 as is in the parent IC card 10. Thus, the provision of the certificate generation unit to the child IC card 20 allows the child IC card 20 to function equivalently to the parent IC card 10. In other words, the child IC card 20 can generate a grandchild IC card.

However, the operations in the parent IC card and the child IC card are different in the following points. In Fig. 4, the parent IC card 10 generates the signature value for the public key for the child IC card 20 by the certificate generation unit 104, and the child IC card 20 stores it as the singed public key A103. In the case of generating a grandchild IC card by the child IC card 20, the child IC card 20 generates a signed public key for the grandchild IC card. Then, the child IC card 20 transmits the generated signed public key to the grandchild IC card, together with the public key certificate of the parent IC card 10 as well as the singed public key A103 for the child IC card 20, which are transmitted from the parent IC card 10 and stored in the child IC card 20.

When the user uses the grandchild IC card, the public key certificate A101 of the parent IC card 10, the signed public key A103 for the child IC card 20, the signed public key for the grandchild IC card, and the signature value A201 of the random number, are transmitted from the grandchild IC card to the service provider device 50 through the terminal device 30. In other words, the grandchild IC card, which is two generations after the parent IC card 10, transmits two signed public keys. With the configuration described above, it is possible to generate and use not only the IC card of two generations, but also an IC card of a chain of generations.

Further, it is also possible to generate plural child IC cards from a single parent IC card in order to improve the convenience of card use.

Further, although the parent IC card generates the signed public key for the child IC card, it is also possible that the public key certificate has a form that certifies that the owner of the public key is valid.

Further, the number of chains of the certificate (the signed public key or the public key certificate) to be used at the time of card use will vary depending on the number of generations of the child IC card and the grandchild IC card. In this case, it is possible to change the type of service to be provided according to the number of generations of the child IC card and grandchild IC card to be used. To change in the type of service to be provided depending on the number of generations, the service provider device 50 includes a table of the types of services, the number of services, and the like, according to the number of generations, and refers to the table.

It is to be understood that the present invention is not limited to the above-described embodiments, and that various changes and modifications can be effected therein by one skilled in the art without departing from the spirit or scope of the present invention as defined in the appended claims.

### BRIEF DESCRIPTION OF THE DRAWINGS

Fig. 1 is a block diagram of an IC card system according to a first embodiment;
Fig. 2 is a hardware block diagram of a terminal device;
Fig. 3 is a hardware block diagram of an IC card;
Fig. 4 is a flowchart of the process of generating a child IC card according to the first embodiment;
Fig. 5 is a flowchart of the process of using the child IC card according to the first embodiment;
Fig. 6 is a block diagram of an IC card system according to a second embodiment;
Fig. 7 is a flowchart of the process of generating a child IC card according to the second embodiment; and
Fig. 8 is a flowchart of the process of using the child IC card according to the second embodiment.

### EXPLANATION OF CODES

10: parent IC card, 11: input/output device, 12: CPU, 13: tamper resistant memory device, 14: tamper resistant memory, 15: internal communication line, 20: child IC card, 21: CPU, 22: main memory device, 23: biometric information reading device, 24: auxiliary memory device, 25: communication device, 26: input/output device, 27: reading device, 28: storage medium, 29: internal communication line, 30: terminal device, 40: network, 50: service provider device, A101: public key certificate of parent IC card, A102: deactivated private key, A103: signed public key, A104: encrypted biometric information, A201: signature value of random number, A202: public key, A203: biometric information, A301: data request for generating child IC card, A302: service request, A303: biometric information, A304: request for key generation, A501: random number

## Claims

1. An IC card comprising:
a key storage unit for storing a secret key set by an issuer of the IC card, a public key certificate of a parent IC card issued by the certification authority, a public key signed by a private key of the parent IC card, and a private key;
a data transmitting/receiving unit for receiving at least the public key certificate and the signed public key from the parent IC card;
a calculation unit for decrypting encrypted biometric information of a user, which is received from the parent IC card through the data transmitting/receiving unit, using the secret key; and
a biometric information storage unit for storing the decrypted first biometric information.

2. The IC card according to claim 1,
wherein the signed public key is a key generated in such a way that a public key of a pair of the public key and private key generated by the parent IC card, is signed by the private key of the parent IC card, and
wherein the private key, which is stored in the key storage unit, is a key generated in such a way that the private key of the pair is encrypted by the first biometric information.

3. The IC card according to claim 2,
wherein the signed public key has a form of public key certificate that certifies that an owner of the public key is valid.

4. The IC card according to claim 2,
wherein in response to the reception of second biometric information and a random number by the data transmitting/receiving unit, when the first biometric information and the second biometric information are identical to each other, the calculation unit decrypts the private key by the first or second biometric information, and calculates a signature value of the random number by the decrypted private key, and
wherein the data transmitting/receiving unit transmits the public key certificate and the signed public key, which are stored in the key storage unit, as well as the calculated signature value of the random number.

5. The IC card according to claim 2,
wherein the calculation unit calculates the signature value of the random number by the private key, in response to the reception of second biometric information and random number by the transmitting/receiving unit and when the first biometric information and the second biometric information are identical to each other, and
wherein the data transmitting/receiving unit transmits the public key certificate and the signed public key, which are stored in the key storage unit, as well as the calculated signature value of the random number.

6. The IC card according to claim 1, comprising a key generation unit for generating a pair of public key and private key,
wherein the signed public key is a key generated in such a way that the public key generated by the key generation unit is signed by the private key of the parent IC card, and
wherein the private key stored in the key storage unit is a key generated by the key generation unit.

7. The IC card according to claim 6,
wherein the signed public key has a form of public key certificate that certifies that an owner of the public key is valid.

8. The IC card according to claim 6, further comprising a certificate generation unit,
wherein in response to a request for generating a grandchild IC card, the certificate generation unit generates another signed public key in such a way that the public key generated by the key generation unit is signed by the private key.

9. The IC card according to claim 6,
wherein in response to the reception of a random number by the data transmitting/receiving unit, the calculation unit calculates a signature value of the random number by the private key stored in the key storage unit, and
wherein the data transmitting/receiving unit transmits the public key certificate and the signed public key, which are stored in the key storage unit, as well as the calculated signature value of the random number.

10. An IC card system comprising a parent IC card and a child IC card,
wherein the parent IC card includes:
a first key storage unit for storing a first secret key set by an issuer of an IC card, a public key certificate of the parent IC card that is issued by the certification authority, and a first private key;
a first calculation unit for generating a public key signed by the first private key, and encrypting first biometric information of a user by the secret key; and
a first data transmitting/receiving unit for transmitting at least the public key certificate, the signed public key, and the encrypted first biometric information to the child IC card,
wherein the child IC card includes:
a second key storage unit for storing a second secret key set by the issuer of the IC card, the public key certificate, the signed public key, and a second private key;
a second data transmitting/receiving unit for receiving at least the public key certificate, the signed public key, and the encrypted first biometric information, from the parent IC card;
a second calculation unit for decrypting the encrypted first biometric information received by the data transmitting/receiving unit, using the second secret key; and
a biometric information storage unit for storing the decrypted first biometric information.

11. The IC card system according to claim 10,
wherein the signed public key is a key generated in such a way that a first public key of the pair of the first public key and the first private key, which is generated by the parent IC card, is signed by the first private key, and
wherein the second private key stored in the second key storage unit is a key generated in such a way that the first private key of the pair is encrypted by the first biometric information.

12. The IC card according to claim 11,
wherein the signed public key has a form of public key certificate that certifies that an owner of the first public key is valid.

13. The IC card system according to claim 10,
wherein the child IC card includes a second key generation unit for generating a pair of second public key and second private key,
wherein the second data transmitting/receiving unit transmits the second public key to the parent IC card,
wherein the first calculation unit of the parent IC card generates the signed public key in such a way that the second public key received by the first data transmitting/receiving unit is signed by the first private key,
wherein the second private key stored in the second key storage unit is the second private key generated by the second key generation unit.

14. The IC card according to claim 13,
wherein the signed public key has a form of public key certificate that certifies that an owner of the second public key is valid.

15. The IC card according to claim 13, further comprising a certificate generation unit,
wherein in response to a request to generate a grandchild IC card, the certificate generation unit generates another signed public key in such a way that the second public key generated by the second key generation unit is signed by the second private key.

16. An IC card system comprising an IC card and a service provider device,
wherein the IC card includes:
a biometric information storage unit for storing first biometric information;
a key storage unit for storing a secret key set by an issuer of the IC card at the issue of the card, a public key certificate of a parent IC card that is issued by the certification authority, a public key signed by a private key of the parent IC card, and a private key encrypted by the first biometric information;
a calculation unit for decrypting the encrypted private key, in response to the reception of second biometric information and a random number and when the first biometric information and the second biometric information are identical to each other, by the first or second biometric information, and for calculating the signed value of the random number by the decrypted private key; and
a data transmitting/receiving unit for receiving the second biometric information and the random number, and for transmitting the public key certificate and the signed public key, which are stored in the key storage unit, as well as the calculated signature value of the random number to the service provider device,
wherein the service provider device verifies the public key certificate, the signed public key, and the signature value of the random number, which are transmitted from the IC card, to provide a service.

17. The IC card system according to claim 16,
wherein the service provider device changes the service to be provided according to the number of the signed public key transmitted from the IC card.

18. An IC card generation method for generating a child IC card from a parent IC card,
wherein the parent IC card includes the steps of:
storing a first secret key set by an issuer of the IC card, a public key certificate of the parent IC card that is issued by the certification authority, and a first private key;
generating a public key signed by the first private key;
encrypting first biometric information of a user by the secret key; and
transmitting at least the public key certificate, the signed public key, and the encrypted first biometric information to the child IC card, and
wherein the child IC card includes the steps of:
storing a second secret key set by the issuer of the IC card, the public key certificate, the signed public key, and a second private key;
receiving at least the public key certificate, the signed public key, and the first biometric information from the parent IC card;
decrypting the encrypted first biometric information by the second secret key; and
storing the decrypted first biometric information.

19. The IC card generation method according to claim 18,
wherein the signed public key is a key generated in such a way that a first public key of a pair of the first public key and the first private key, which is generated by the parent IC card, is singed by the first private key, and
wherein the second private key, which is stored in the second key storage unit, is a key generated in such a way that the second private key of the pair is encrypted by the first biometric information.

20. The IC card generation method according to claim 18,
wherein the child IC card generates a pair of a second public key and the second private key, and transmits the second public key to the parent IC card, and
wherein the parent IC card generates the signed public key in such a way that the received second public key is signed by the first private key.

21. An IC card use method by a service provider device using an IC card,
wherein the IC card includes the steps of:
storing first biometric information;
storing a secret key set by an issuer of the IC card at the issue of the card, a public key certificate of the parent IC card that is issued by the certification authority, a public key signed by a private key of the parent IC card, and a private key encrypted by the first biometric information;
decrypting the encrypted private key, in response to the reception of second biometric information and a random number and when the first biometric information and the second biometric information are identical to each other, by the first or second biometric information;
calculating a signature value of the random number by the decrypted private key; and
transmitting the public key certificate, the signed public key, and the signature value of the random number to the service provider device, and
wherein the service provider device verifies the public key certificate, the signed public key, and the signature value of the random number, which are transmitted from the IC card, to provide a service.
